# EUROPEAN PATENT APPLICATION

(11) **EP 4 723 461 A1**
(43) Date of publication of application: **08.04.2026**
(21) Application number: 23939128.7
(22) Date of filing: 01.08.2023
(51) Int. Cl.: H02M 3/335

(54) **SYNCHRONOUS RECTIFICATION DRIVING METHOD AND APPARATUS, AND DEVICE AND DIRECT-CURRENT CONVERTER**

(30) Priority: 31.05.2023 CN 202310642874
(71) Applicant: Vertiv Corporation, Westerville, OH 43082 (US)
(72) Inventor: LI, Jian, Shenzhen, Guangdong 518055 (CN); XIANG, Bo, Shenzhen, Guangdong 518055 (CN)
(74) Representative: Ambroz, Simon
(86) International application number: PCT/CN2023/110449
(87) International publication number: WO 2024/244148

(57) **Abstract**

A synchronous rectification driving method and apparatus, and a device and a direct-current converter. The method comprises: S201, when driving signals which are controlled to be inputted into synchronous rectification transistors in a synchronous rectification circuit all operate normally, acquiring measurement data which represents the total current flowing through synchronous rectification transistors in any switch unit; and S202, comparing the measurement data with a preset threshold, and if the measurement data is less than or equal to the preset threshold, controlling, for each switch unit, driving signals inputted into N synchronous rectification transistors in the switch unit to be continuously turned off, wherein N is a positive integer less than or equal to M. Compared with controlling, according to only Vds of synchronous rectification transistors, driving signals inputted into synchronous rectification transistors to be continuously turned off, controlling driving signals inputted into N synchronous rectification transistors in a switch unit to be continuously turned off after it is detected that measurement data is less than or equal to a preset threshold can reduce the probability of a MOSFET being controlled to be turned off in advance due to a small voltage Vds, thereby improving the reliability of a synchronous rectification circuit.

## Description

The present application claims priority to Chinese Patent Application No. 202310642874.6, titled "SYNCHRONOUS RECTIFICATION DRIVING METHOD AND APPARATUS, AND DEVICE AND DIRECT-CURRENT CONVERTER", filed on May 31, 2023 with the China National Intellectual Property Administration, which is incorporated herein by reference in its entirety.

### FIELD

The present disclosure relates to the technical field of power supply, and in particular to a synchronous rectification driving method and apparatus, and device and direct-current converter.

### BACKGROUND

To meet the requirements of high efficiency for power supplies, the synchronous rectification technology is widely adopted in DC-DC (direct-current) converters. In commonly-used synchronous rectification techniques at present, a specialized power Metal Oxide Semiconductor Field Effect Transistors (MOSFETs) with extremely low resistance is typically employed to replace a conventional rectification diode. Compared with using the rectification diode, a MOSFET exhibits lower losses and higher efficiency.

To drive a MOSFET in a synchronous rectification circuit, a driving voltage is required to be turned on and turned off at appropriate time instants. A self-driven DS voltage detection method is commonly-used, in which a MOSFET in the synchronous rectification circuit is driven by directly detecting a drain-source (DS) voltage between a drain and a source of the synchronous rectification MOSFET. In this method, a MOSFET is controlled to be turned on or turned off by detecting whether a current flows through a body diode of the MOSFET. When a current flows through the body diode of the MOSFET, the MOSFET corresponding to the body diode is controlled to be turned on. After the MOSFET is turned on, the current shifts from the body diode to a channel of the MOSFET. When a detected DS voltage drops to around 0V, it means the current flowing through the MOSFET also approaches 0A, the MOSFET is turned off at this moment.

To further reduce conduction power consumption and improve overall efficiency, multiple MOSFETs are typically connected in parallel to lower a total channel resistance Rds. However, after Rds reduces, the same current flowing will result in a smaller detected DS voltage, which may cause premature or erroneous turn-off of the MOSFET, thereby increasing losses in the synchronous rectification transistor MOSFET, reducing reliability of the synchronous rectification circuit, and ultimately decreasing overall efficiency.

### SUMMARY

A synchronous rectification driving method, a synchronous rectification driving apparatus, a synchronous rectification driving device, and a converter are provided according to the present disclosure, to reduce losses in a synchronous rectification transistor MOSFET in the synchronous rectification circuit and enhance reliability of the synchronous rectification transistor MOSFET.

In a first aspect, an embodiment of the present disclosure provides a synchronous rectification driving method which is applied to a synchronous rectification circuit in a direct-current converter. Where the synchronous rectification circuit includes at least two switching units, each of the switching units includes M synchronous rectification transistors connected in parallel, where M is a positive integer greater than or equal to 2. The method includes:
obtaining detection data representing a total current flowing through synchronous rectification transistors in any of the switching units when driving signals inputted to the synchronous rectification transistors in the synchronous rectification circuit all operate normally;
comparing the detection data with a preset threshold, and controlling, for each of the switching units, the driving signals inputted to N synchronous rectification transistors in the switching unit to be continuously turned off when the detection data is less than or equal to the preset threshold, where N is a positive integer less than or equal to M.

In a possible implementation, the preset threshold includes multiple levels of preset thresholds, where a present-level of preset threshold is less than a next-level of preset threshold;
the controlling, for each of the switching units, the driving signals inputted to N synchronous rectification transistors in the switching unit to be continuously turned off when the detection data is less than or equal to the preset threshold includes:
controlling, for each of the switching units, the driving signals inputted to synchronous rectification transistors corresponding to the present-level of preset threshold in the switching unit to be continuously turned off when the detection data is less than or equal to the present-level of preset threshold and greater than a previous-level of preset threshold for the present-level of preset threshold;
where a number of synchronous rectification transistors corresponding to each level of preset threshold is negatively correlated to a level number of each level of preset threshold.

In an embodiment, the method further includes:
controlling, for each of the switching units, the driving signals inputted to synchronous rectification transistors corresponding to a first-level of preset threshold in the switching unit to be continuously turned off when the detection data is less than or equal to the first-level of preset threshold;
where the first-level of preset threshold is less than any of other levels of preset thresholds except for the first-level of preset threshold.

In a possible implementation, the controlling, for each of the switching units, the driving signals inputted to synchronous rectification transistors corresponding to a first-level of preset threshold in the switching unit to be continuously turned off when the detection data is less than or equal to the first-level of preset threshold includes:
controlling, for each of the switching units, the driving signals inputted to all synchronous rectification transistors in the switching unit to be continuously turned off when the detection data is less than or equal to the first-level of preset threshold.

In a possible implementation, the detection data includes one of:
an output current of the direct-current converter;
an output power of the direct-current converter; and
the total current flowing through synchronous rectification transistors in any of the switching units.

In a second aspect, an embodiment of the present disclosure provides a synchronous rectification driving apparatus which is applied to a synchronous rectification circuit in a direct-current converter, where the synchronous rectification circuit includes at least two switching units, each of the switching units includes M synchronous rectification transistors connected in parallel, where M is a positive integer greater than or equal to 2. The apparatus includes an acquisition module and a control module.

The acquisition module is configured to obtain detection data representing a total current flowing through synchronous rectification transistors in any of the switching units when driving signals inputted to the synchronous rectification transistors in the synchronous rectification circuit are controlled to all operate normally.

The control module is configured to compare the detection data with a preset threshold, and control, for each of the switching units, the driving signals inputted to N synchronous rectification transistors in the switching unit to be continuously turned off when the detection data is less than or equal to the preset threshold, where N is a positive integer less than or equal to M.

In an optional embodiment, the preset threshold includes multiple levels of preset thresholds, where a present-level of preset threshold is less than a next-level of preset threshold; and
the control module is configured to:
control, for each of the switching units, the driving signals inputted to synchronous rectification transistors corresponding to the present-level of preset threshold in the switching unit to be continuously turned off when the detection data is less than or equal to the present-level of preset threshold and greater than a previous-level of preset threshold for the present-level of preset threshold;
where a number of synchronous rectification transistors corresponding to each level of preset threshold is negatively correlated to a level number of each level of preset threshold.

In an optional embodiment, the control module is further configured to:
control, for each of the switching units, the driving signals inputted to synchronous rectification transistors corresponding to a first-level of preset threshold in the switching unit to be continuously turned off when the detection data is less than or equal to the first-level of preset threshold;
where the first-level of preset threshold is less than any of other levels of preset thresholds except for the first-level of preset threshold.

**In** an optional embodiment, when the detection data is less than or equal to the first-level of preset threshold, for each of the switching units, the control module is further configured to:
control, for each of the switching units, the driving signals inputted to all synchronous rectification transistors in the switching unit to be continuously turned off when the detection data is less than or equal to the first-level of preset threshold.

**In** an optional embodiment, the detection data includes one of:
an output current of the direct-current converter;
an output power of the direct-current converter; and
the total current flowing through synchronous rectification transistors in any of the switching units.

**In** a third aspect, an embodiment of the present disclosure provides a synchronous rectification driving device which is applied to a synchronous rectification circuit in a direct-current converter, where the synchronous rectification circuit includes at least two switching units, and each of the switching units includes M synchronous rectification transistors connected in parallel, where M is a positive integer greater than or equal to 2. The synchronous rectification driving device includes a memory, a processor, and a computer program stored on the memory and executable on the processor, where the processor, when executing the computer program, implements steps of the method as described in any one of the first aspect.

**In** a fourth aspect, an embodiment of the present disclosure provides a direct-current converter. The direct-current converter includes: a DC-DC conversion circuit, a resonance circuit, an isolation transformer, a synchronous rectification circuit, and the synchronous rectification driving device as described in the third aspect.

The DC-DC conversion circuit is electrically connected to a primary side of the isolation transformer through the resonance circuit, a secondary side of the isolation transformer is electrically connected to the synchronous rectification circuit, and the rectification driving device is electrically connected to a control terminal of the synchronous rectification circuit.

The following beneficial effects are provided.

The synchronous rectification driving method, the synchronous rectification driving apparatus, and the synchronous rectification driving device, and the converter are provided according to the embodiments of the present disclosure. The method includes: first obtaining detection data representing a total current flowing through synchronous rectification transistors in any of the switching units when driving signals inputted to the synchronous rectification transistors in the synchronous rectification circuit all operate normally; then comparing the detection data with a preset threshold, and controlling, for each of the switching units, the driving signals inputted to N synchronous rectification transistors in the switching unit to be continuously turned off when the detection data is less than or equal to the preset threshold, where N is a positive integer less than or equal to M. In the present disclosure, when it is detected that the detection data representing a total current flowing through synchronous rectification transistors in any of the switching units is less than or equal to the preset threshold, the driving signals inputted to N synchronous rectification transistors in the switching unit are controlled to be continuously turned off, that is, in the present disclosure, the driving signals inputted to synchronous rectification transistors in the switching unit are controlled to be continuously turned off by using the detection data representing the total current flowing through the synchronous rectification transistors in any of the switching units, regardless of Vds of the synchronous rectification transistors. Therefore, compared to the prior art that the driving signals inputted to the synchronous rectification transistors are controlled to be continuously turned off based on the Vds of the synchronous rectification transistors, a probability that the MOSFET is controlled to be prematurely turned off due to a low Vds voltage is reduced, and thereby the reliability of the synchronous rectification circuit is improved and the overall efficiency is improved.

### BRIEF DESCRIPTION OF THE DRAWINGS

In order to clearly illustrate technical solutions in the embodiments of the present disclosure, the accompanying drawings used in the description of the embodiments is briefly described below. It is apparent that the accompanying drawings in the following description are only for some of the embodiments of the present disclosure. For those skilled in the art, other drawings may be obtained based on the provided accompanying drawings without creative efforts.
FIG. 1 is a schematic circuit diagram of a direct-current converter in related technologies.
FIG. 2 is a schematic flowchart of a synchronous rectification driving method according to an embodiment of the present disclosure;
FIG. 3 is a schematic structural diagram of a direct-current converter according to an embodiment of the present disclosure;
FIG. 4 is a schematic diagram of waveforms of various output signals in a synchronous rectification driving method according to an embodiment of the present disclosure;
FIG. 5 is a schematic diagram of waveforms of various output signals in a synchronous rectification driving method according to another embodiment of the present disclosure;
FIG. 6 is a schematic diagram of waveforms of various output signals in a synchronous rectification driving method according to another embodiment of the present disclosure;
FIG. 7 is a schematic diagram of a complete process of a synchronous rectification driving method according to an embodiment of the present disclosure;
FIG. 8 is a schematic structural diagram of a synchronous rectification driving apparatus according to an embodiment of the present disclosure;
FIG. 9 is a schematic structural diagram of a synchronous rectification driving device according to an embodiment of the present disclosure; and
FIG. 10 is a schematic structural diagram of a direct-current converter according to an embodiment of the present disclosure.

### DETAILED DESCRIPTION

In order to make the object, technical solution and advantages of the present disclosure clearer, the present disclosure will be further described in detail below in conjunction with the accompanying drawings. Apparently, the described embodiments are only some rather than all embodiments of the present disclosure. All other embodiments obtained by those skilled in the art based on the embodiments described in the present disclosure without any creative efforts fall in the protection scope of the present disclosure.

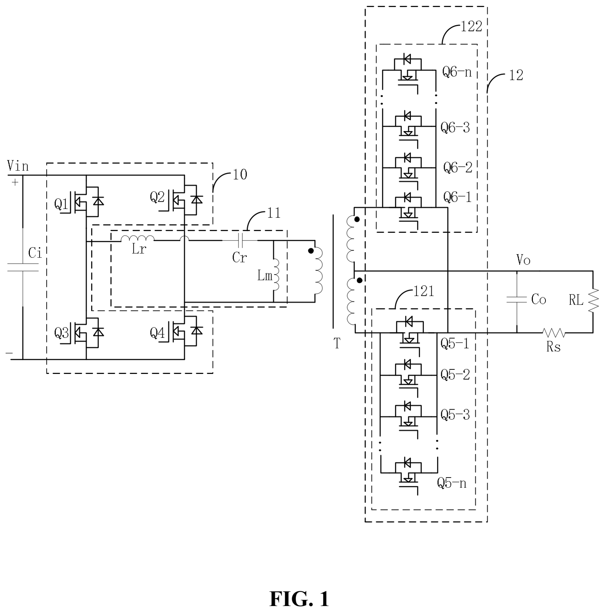

FIG. 1 is a schematic circuit diagram of a direct-current converter in related technologies. The direct-current converter is an LLC resonant converter, and the LLC resonant converter includes a DC-DC conversion circuit 10, an LLC resonant circuit 11, an isolation transformer T, and a synchronous rectification circuit 12.

The DC-DC conversion circuit 10 includes a first switching transistor Q1, a second switching transistor Q2, a third switching transistor Q3, and a fourth switching transistor Q4. The first switching transistor Q1 is connected in series with the third switching transistor Q3 to form a first bridge arm, and the second switching transistor Q2 is connected in series with the fourth switching transistor Q4 to form a second bridge arm. The DC-DC conversion circuit 10 is configured to convert a direct-current voltage into a square wave voltage or step wave voltage.

The LLC resonant circuit 11 includes a resonant inductor Lr, a resonant capacitor Cr, and an excitation inductor Lm which are connected in series. The LLC resonant circuit 11 is connected between a midpoint of the first bridge arm and a midpoint of the second bridge arm.

A primary side of isolation transformer T is connected in parallel with the excitation inductor Lm in the LLC resonant circuit 11, a first secondary side of the isolation transformer T is connected in series with a second secondary side of the isolation transformer T, and a connection point for the series connection serves as a first output terminal of the direct-current converter.

The synchronous rectification circuit 12 includes a first synchronous rectification transistor group 121 and a second synchronous rectification transistor group 122. The first synchronous rectification transistor group 121 includes n parallel-connected first synchronous rectification transistors, Q5-1, Q5-2, Q5-3,..., Q5-n. The second synchronous rectification transistor group 122 includes n parallel-connected second synchronous rectification transistors, Q6-1, Q6-2, Q6-3,..., Q6-n. A first terminal of the n parallel-connected first synchronous rectification transistors are electrically connected to a first terminal of the first secondary side of the isolation transformer T. A Second terminal of the n parallel-connected first synchronous rectification transistors are electrically connected to a second terminal of the n parallel-connected second synchronous rectification transistors, and serve as a second output terminal of the direct-current converter. A first terminal of the n parallel-connected second synchronous rectification transistors are electrically connected to a second terminal of the second secondary side of the isolation transformer T.

As shown in FIG. 1, the direct-current converter in the related technologies further includes an input filter capacitor Ci, an output filter capacitor Co, and a sampling resistor Rs. The input filter capacitor Ci filters inputted direct-current voltage, the output filter capacitor Co filters outputted direct-current voltage, and the sampling resistor Rs samples an output current.

Additionally, RL shown in FIG. 1 represents a load.

In the following, an 80V/2mohm synchronous rectification transistor operating at a maximum current of 50A is described as an example, where 80V represents a withstand voltage for Vds for a MOSFET and 2mohm represents a conduction resistance value of the MOSFET. If each of the synchronous rectification transistor groups only includes one synchronous rectification transistor, when the MOSFET is turned on and a current flowing through a channel of the MOSFET is 50A, a voltage drop between a drain and a source (DS) of the MOSFET is 50A×2mohm=100mV, and a conduction loss is 50A×50A×2mohm =5W. To reduce the conduction loss in synchronous rectification transistors, MOSFETs may be connected in parallel. For example, four 80V/2mohm MOSFETs are connected in parallel to form one synchronous rectification transistor group. A total equivalent resistance of four 80V/2mohm MOSFETs connected in parallel is 0.5mohm, and when the 50A current flows through, the Vds of each of the MOSFETs is 50A×0.5mohm=25mV, and the conduction loss is 50A×50A×0.5mohm=1.25W. Compared with a single 80V/2mohm MOSFET, four 80V/2mohm MOSFETs connected in parallel can reduce the conduction loss and improve the overall efficiency.

Parallel-connected MOSFETs may reduce switching loss of the MOSFET, and improve overall efficiency, but the Vds of the MOSFET decreases. Under a light load condition, the Vds of the MOSFET will be even lower. For example, when a 10A current flows through, the Vds of the MOSFET drops from 10A×2mohm=20mA before parallel connection to 10A×0.5mohm=5mA after parallel connection. For a self-driven DS voltage detection scheme, a 5mA voltage may easily cause detection errors and thus a premature driving to turn-off a MOSFET.

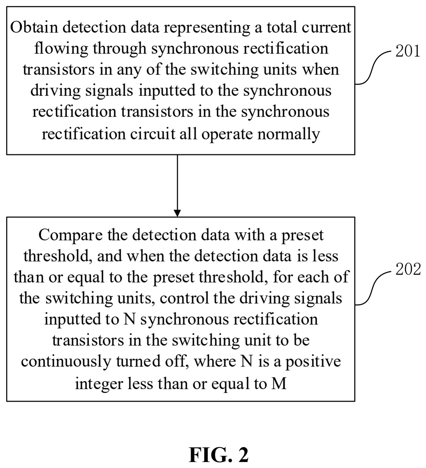

To address the above issues, a synchronous rectification driving method is provided according to an embodiment of the present disclosure. The driving method is applied to a synchronous rectification circuit in a direct-current converter. The synchronous rectification circuit includes at least two switching units, each of the switching units includes M synchronous rectification transistors connected in parallel, and M is a positive integer greater than or equal to 2.The method includes the following steps S201 to S202 as shown in FIG. 2.

In step S201, detection data representing a total current flowing through synchronous rectification transistors in any of the switching units is obtained when driving signals inputted to the synchronous rectification transistors in the synchronous rectification circuit all operate normally.

In step S202, the detection data is compared with a preset threshold, and when the detection data is less than or equal to the preset threshold, for each of the switching units, the driving signals inputted to N synchronous rectification transistors in the switching unit are controlled to be continuously turned off, where N is a positive integer less than or equal to M.

In the embodiment of the present disclosure, detection data representing a total current flowing through synchronous rectification transistors in any of the switching units is first obtained when driving signals inputted to the synchronous rectification transistors in the synchronous rectification circuit all operate normally. Then the detection data is compared with a preset threshold, and when the detection data is less than or equal to the preset threshold, for each of the switching units, the driving signals inputted to N synchronous rectification transistors in the switching unit are controlled to be continuously turned off, where N is a positive integer less than or equal to M. In the present disclosure, when it is detected that the detection data representing a total current flowing through synchronous rectification transistors in any of the switching units is less than or equal to the preset threshold, the driving signals inputted to N synchronous rectification transistors in the switching unit are controlled to be continuously turned off, that is, in the present disclosure, the driving signals inputted to synchronous rectification transistors in the switching unit are controlled to be continuously turned off by using the detection data representing the total current flowing through the synchronous rectification transistors in any of the switching units, regardless of Vds of the synchronous rectification transistors in the switching units. Therefore, compared to the prior art that the driving signals inputted to the synchronous rectification transistors are controlled to be continuously turned off based on the Vds of the synchronous rectification transistors, a probability that the MOSFET is controlled to be prematurely turned off due to a low Vds voltage is reduced, and thereby the reliability of the synchronous rectification circuit is improved and the overall efficiency is improved.

In an embodiment, the detection data representing the total current flowing through the synchronous rectification transistors in any of the switching units may be an output current of the direct-current converter, an output power of the direct-current converter, or a total current flowing through synchronous rectification transistors in any of the switching units.

In the embodiment of the present disclosure, the reliability of the synchronous rectification circuit can be enhanced by controlling the driving signals inputted to the synchronous rectification transistors to be continuously turned off by using the output current of the direct-current converter, the output power of the direct-current converter, or the total current flowing through synchronous rectification transistors in any of the switching units, compared with using Vds of the synchronous rectification transistors.

In a specific implementation, the preset thresholds include multiple levels of preset thresholds, where a present-level of preset threshold is smaller than a next-level of preset threshold. For example, when there are three levels of preset thresholds, a first-level of preset threshold is smaller than a second-level of preset threshold, and the second-level of preset threshold is less than a third-level of preset threshold, where the first-level of preset threshold is a previous-level of preset threshold for the second-level of preset threshold, and the second-level of preset threshold is a next-level of preset threshold for the first-level of preset threshold.

In the embodiment of the present disclosure, when multiple levels of preset thresholds are included, if the detection data is less than or equal to the present-level of preset threshold and greater than a previous-level of preset threshold for the present-level of preset threshold, for each of the switching units, the driving signals inputted to synchronous rectification transistors corresponding to the present-level of preset threshold in the switching unit are controlled to be continuously turned off, where the number of synchronous rectification transistors corresponding to each level of preset threshold is negatively correlated to the level number of each level of preset threshold

**In** an embodiment, when the detection data is less than or equal to a first-level of preset threshold, for each of the switching units, synchronous rectification transistors corresponding to the first-level of preset threshold in the switching unit are controlled to be turned off, where the first-level of preset threshold is a minimum preset threshold in the multiple levels of preset thresholds

**In** a specific implementation, when the detection data is less than or equal to a first-level of preset threshold, for each of the switching units, the driving signals inputted to all synchronous rectification transistors in the switching unit are controlled to be continuously turned off.

**In** the embodiment of the present disclosure, to further enhance the reliability of the synchronous rectification transistors, when the detection data is less than or equal to the first-level of preset threshold, the driving signals for all synchronous rectification transistors in each of the switching units in the synchronous rectification circuit are controlled to be continuously turned off, that is, all synchronous rectification transistors in each of the switching units in the synchronous rectification circuit are controlled to be turned off.

For example, there are three levels of preset thresholds: a first-level of preset threshold, a second-level of preset threshold, and a third-level of preset threshold. The first-level of preset threshold is less than the second-level of preset threshold, and the second-level of preset threshold is less than the third-level of preset threshold. Each of the switching units in the synchronous rectification circuit includes four synchronous rectification transistors: a synchronous rectification transistor 1, a synchronous rectification transistor 2, a synchronous rectification transistor 3, and a synchronous rectification transistor 4. The first-level of preset threshold corresponds to four synchronous rectification transistors, that is, the synchronous rectification transistor 1, the synchronous rectification transistor 2, the synchronous rectification transistor 3, and the synchronous rectification transistor 4. The second-level of preset threshold corresponds to three synchronous rectification transistors, that is, the synchronous rectification transistor 2, the synchronous rectification transistor 3, and the synchronous rectification transistor 4. The third-level of preset threshold corresponds to two synchronous rectification transistors, that is, the synchronous rectification transistor 3 and the synchronous rectification transistor 4. When the detection data is less than or equal to the third-level of preset threshold and greater than the second-level of preset threshold, the driving signals inputted to the synchronous rectification transistors corresponding to the third-level of preset threshold are controlled to be continuously turned off, where the synchronous rectification transistors corresponding to the third-level of preset threshold are the synchronous rectification transistor 3 and the synchronous rectification transistor 4 in each of the switching units. When the detection data is less than or equal to the second-level of preset threshold and greater than the first-level of preset threshold, the driving signals inputted to the synchronous rectification transistors corresponding to the second-level of preset threshold are controlled to be continuously turned off, where the synchronous rectification transistors corresponding to the second-level of preset threshold are the synchronous rectification transistor 2, the synchronous rectification transistor 3, and the synchronous rectification transistor 4 in each of the switching units. When the detection data is less than or equal to the first-level of preset threshold, the driving signals inputted to the synchronous rectification transistors corresponding to the first-level of preset threshold are controlled to be continuously turned off, where the synchronous rectification transistors corresponding to the first-level of preset threshold are all synchronous rectification transistors in each of the switching units.

For a better understanding of the embodiments of the present disclosure, the disclosure is described in specific embodiments with reference to the accompanying drawings.

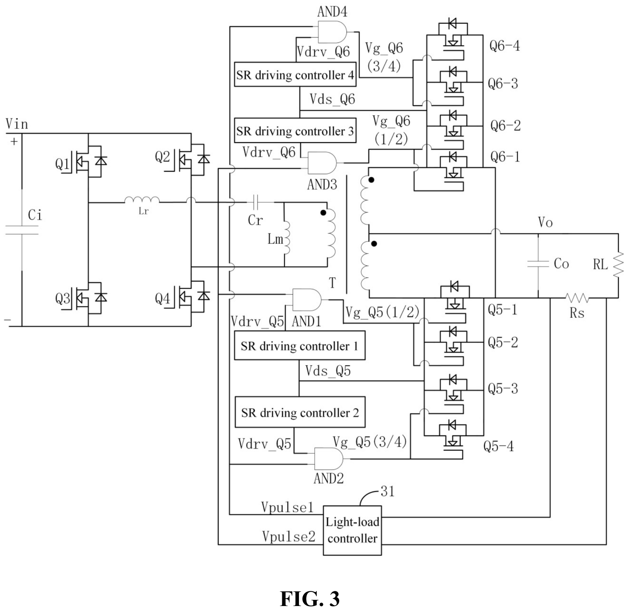

FIG. 3 is a schematic structural diagram of a direct-current converter according to an embodiment of the present disclosure. The synchronous rectification circuit in this direct-current converter includes two switching units: a first switching unit and a second switching unit. Each of the switching units includes four MOSFETs connected in parallel. The first switching unit includes first synchronous rectification transistors MOSFET Q5-1, MOSFET Q5-2, MOSFET Q5-3, and MOSFET Q5-4 connected in parallel, and the second switching unit includes second synchronous rectification transistors MOSFET Q6-1, MOSFET Q6-2, MOSFET Q6-3, and MOSFET Q6-4 connected in parallel. Furthermore, the direct-current converter according to the embodiment of the present disclosure further includes a light-load controller 31, an SR driving controller 1, an SR driving controller 2, an SR driving controller 3, an SR driving controller 4, a first AND gate AND1, a second AND gate AND2, a third AND gate AND3, and a fourth AND gate AND4. A sampling terminal of the light-load controller 31 is electrically connected to both ends of a sampling resistor Rs. A first output terminal of the light-load controller 31 is electrically connected to a first input terminal of the second AND gate AND2 and a first input terminal of the fourth AND gate AND4. A second output terminal of the light-load controller 31 is electrically connected to a first input terminal of the first AND gate AND1 and a first input terminal of the third AND gate AND3. An input terminal of the SR driving controller 1 and an input terminal of the SR driving controller 2 are electrically connected to a first terminal of four parallel-connected first synchronous rectification transistors. An output terminal of SR driving controller 1 is electrically connected to a second input terminal of the first AND gate AND1. An output terminal of the SR driving controller 2 is electrically connected to a second input terminal of the second AND gate AND2. An input terminal of SR driving controllers 3 and an input terminal of the SR driving controllers 4 are electrically connected to a first terminal of four parallel-connected second synchronous rectification transistors. An output terminal of the SR driving controller 3 is electrically connected to a second input terminal of the third AND gate AND3. An output terminal of the SR driving controller 4 is electrically connected to a second input terminal of the fourth AND gate AND4. An output terminal of the first AND gate AND1 is electrically connected to a control terminal of the MOSFET Q5-1 and a control terminal of the MOSFET Q5-2. An output terminal of the second AND gate AND2 is electrically connected to a control terminal of the MOSFET Q5-3 and a control terminal of the MOSFET Q5-4. An output terminal of the third AND gate AND3 is electrically connected to a control terminal of the MOSFET Q6-1 and a control terminal of the MOSFET Q6-2. An output terminal of the fourth AND gate AND4 is electrically connected to a control terminal of the MOSFET Q6-3 and a control terminal of the MOSFET Q6-4.

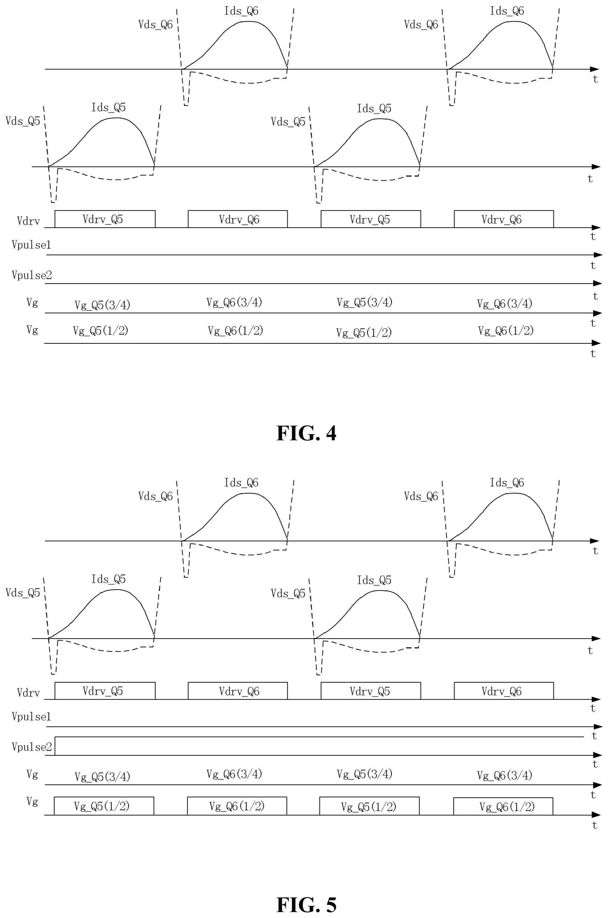

The light-load controller 31 acquires an output current Io of the direct-current converter. In the embodiment of the present disclosure, the preset thresholds includes a first-level of preset threshold Ith1 and a second-level of preset threshold Ith2, where the second-level of preset threshold Ith2 is greater than the first-level of preset threshold Ith1. The light-load controller 31 performs evaluation on the acquired output current Io. When the input current Io is less than the first-level of preset threshold Ith1, both a first control signal Vpulse1 outputted from the first output terminal of the light-load controller 31 and a second control signal Vpulse2 outputted from the second output terminal of the light-load controller 31 are low-level, as shown in FIG. 4. Also, the SR driving controller 1 and the SR driving controller 2 detect a Vds_Q5 of the first synchronous rectification transistors, and the SR driving controller 3 and the SR driving controller 4 detect a Vds_Q6 of the second synchronous rectification transistors. When Vds_Q5 is less than 0, driving signals Vdrv_Q5 outputted by the SR driving controller 1 and the SR driving controller 2 are high-level. When Vds_Q5 is greater than 0, driving signals Vdrv_Q5 outputted by the SR driving controller 1 and the SR driving controller 2 are low-level. When Vds_Q6 is less than 0, driving signals Vdrv_Q6 outputted by the SR driving controller 3 and the SR driving controller 4 are high-level. When Vds_Q6 is greater than 0, driving signals Vdrv_Q6 outputted by the SR driving controller 3 and the SR driving controller 4 are low-level, as shown in FIG. 4, since the first control signal Vpulse1 and the second control signal Vpulse2 are low-level, after the driving signal Vdrv_Q5 and the second control signal Vpulse2 pass through the first AND gate AND1, a driving signal Vg_Q5(1/2) outputted is continuously at low-level, that is, the driving signal Vg_Q5(1/2) is controlled to be continuously turned off. After the driving signal Vdrv_Q5 and the first control signal Vpulse1 pass through the second AND gate AND2, a driving signal Vg_Q5(3/4) outputted is continuously at low-level, that is, the driving signal Vg_Q5(3/4) is controlled to be continuously turned off. After the driving signal Vdrv_Q6 and the second control signal Vpulse2 pass through the third AND gate AND3, a driving signal Vg_Q6(1/2) outputted is continuously at low-level, that is, the driving signal Vg_Q6(1/2) is controlled to be continuously turned off. After the driving signal Vdrv_Q6 and the first control signal Vpulse1 pass through the fourth AND gate AND4, a driving signal Vg_Q6(3/4) outputted is continuously at low-level, that is, the driving signal Vg_Q6(3/4) is controlled to be continuously turned off. The driving signals Vg_Q5(1/2), Vg_Q5(3/4), Vg_Q6(1/2), and Vg_Q6(3/4) outputted by the four AND gates are all control signals for controlling the synchronous rectification transistors to be continuously turned off, that is, the MOSFET Q5-1, the MOSFET Q5-2, the MOSFET Q5-3, the MOSFET Q5-4, the MOSFET Q6-1, the MOSFET Q6-2, the MOSFET Q6-3, and the MOSFET Q6-4 are all continuously turned off.

When the output current Io is greater than the first-level of preset threshold Ith1 and is less than or equal to the second-level of preset threshold Ith2, as shown in FIG. 5, the first control signal Vpulse1 outputted from the first output terminal of the light-load controller 31 is low-level, and the second control signal Vpulse2 outputted from the second output terminal of the light-load controller 31 is high-level. When the driving signal Vdrv_Q5 outputted by the SR driving controller 1 is high-level, a driving signal Vg_Q5(1/2) outputted from the first AND gate AND1 is high-level, the MOSFET Q5-1 and the MOSFET Q5-2 are controlled to be turned on. When the driving signal Vdrv_Q5 outputted by the SR driving controller 1 and the SR driving controller 2 is low-level, the driving signal Vg_Q5(1/2) outputted by the first AND gate AND1 is low-level, and the MOSFET Q5-1 and the MOSFET Q5-2 are controlled to be turned off, that is, the driving signal inputted to the MOSFET Q5-1 and the MOSFET Q5-2 operates normally.

When the driving signal Vdrv_Q5 outputted by the SR driving controller 2 is high-level, a driving signal Vg_Q5(3/4) outputted by the second AND gate AND2 is low-level, the MOSFET Q5-3 and the MOSFET Q5-4 are controlled to be turned off. When the driving signal Vdrv_Q5 outputted by the SR driving controller 2 is low-level, the driving signal Vg_Q5(3/4) outputted by the second AND gate AND2 is low-level, the MOSFET Q5-3 and the MOSFET Q5-4 are controlled to be turned off, that is, the driving signal inputted to the MOSFET Q5-3 and the MOSFET Q5-4 is controlled to be continuously turned off.

When the driving signal Vdrv_Q6 outputted by the SR driving controller 3 is high-level, a driving signal Vg_Q6(1/2) outputted by the third AND gate AND3 is high-level, and the MOSFET Q6-1 and the MOSFET Q6-2 are controlled to be turned on. When the driving signal Vdrv_Q6 outputted by the SR driving controller 3 is low-level, the driving signal Vg_Q6(1/2) outputted by the third AND gate AND3 is low-level, the MOSFET Q6-1 and the MOSFET Q6-2 are controlled to be turned off, that is, the driving signal inputted to the MOSFET Q6-1 and the MOSFET Q6-2 operates normally.

When the driving signal Vdrv_Q6 outputted by the SR driving controller 4 is high-level, a driving signal Vg_Q6(3/4) outputted by the fourth AND gate AND4 is low-level, and the MOSFET Q6-3 and the MOSFET Q6-4 are controlled to be turned off. When the driving signal Vdrv_Q6 outputted by the SR driving controller 4 is low-level, the driving signal Vg_Q6(3/4) outputted by the fourth AND gate AND4 is low-level, and the MOSFET Q6-3 and the MOSFET Q6-4 are controlled to be turned off, that is, the driving signal inputted to the MOSFET Q6-3 and the MOSFET Q6-4 is controlled to be continuously turned off.

In FIG. 5, the driving signal inputted to the MOSFET Q5-1 and the MOSFET Q5-2 is controlled to operate normally, the driving signal inputted to the MOSFET Q6-1 and the MOSFET Q6-2 is controlled to operate normally, the driving signal inputted to the MOSFET Q5-3 and the MOSFET Q5-4 is controlled to be continuously turned off, and the driving signal inputted to the MOSFET Q6-3 and the MOSFET Q6-4 is controlled to be continuously turned off. That is, some of the MOSFETs in the circuit are controlled to operate normally, and others of the MOSFETs are controlled to be continuously turned off.

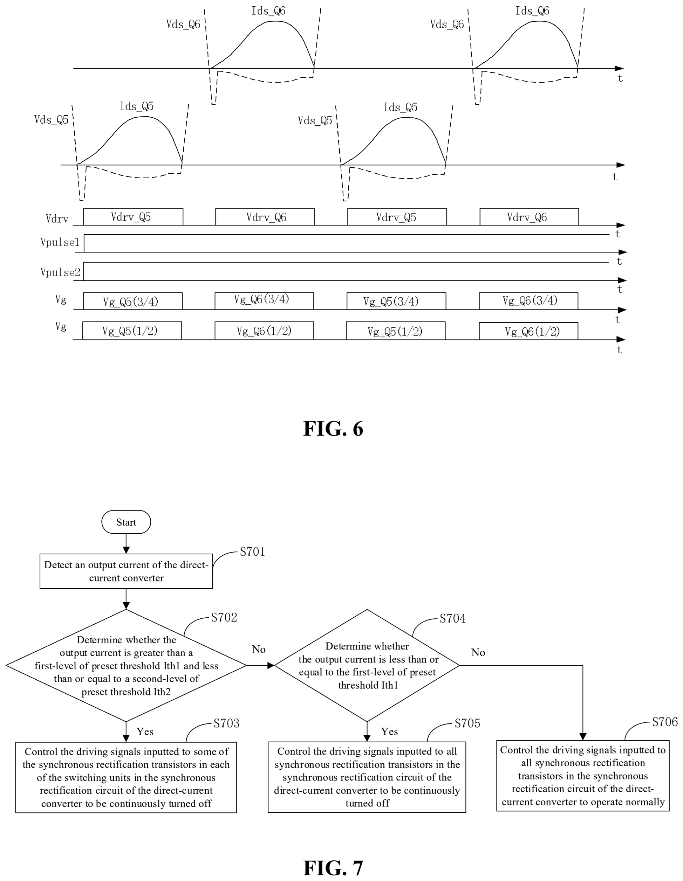

When the output current Io is greater than the second-level of preset threshold Ith2, as shown in FIG. 6, the first control signal Vpulse1 outputted from the first output terminal of the light-load controller 31 and the second control signal Vpulse2 outputted from the second output terminal of the light-load controller 31 are high-level. When the driving signal Vdrv_Q5 outputted by the SR driving controller 1 is high-level, a driving signal Vg_Q5(1/2) outputted from the first AND gate AND1 is high-level, and the MOSFET Q5-1 and the MOSFET Q5-2 are controlled to be turned on. When the driving signal Vdrv_Q5 outputted by the SR driving controller 1 is low-level, the driving signal Vg_Q5(1/2) outputted by the first AND gate AND1 is low-level, and the MOSFET Q5-1 and the MOSFET Q5-2 are controlled to be turned off, that is, the driving signal inputted to the MOSFET Q5-1 and the MOSFET Q5-2 is controlled to operate normally.

When the driving signal Vdrv_Q5 outputted by the SR driving controller 2 is high-level, a driving signal Vg_Q5(3/4) outputted from the second AND gate AND2 is high-level, and the MOSFET Q5-3 and the MOSFET Q5-4 are controlled to be turned on. When the driving signal Vdrv_Q5 outputted by the SR driving controller 2 is low-level, the driving signal Vg_Q5(3/4) outputted by the second AND gate AND2 is low-level, and the MOSFET Q5-3 and the MOSFET Q5-4 are controlled to be turned off, that is, the driving signal inputted to the MOSFET Q5-3 and the MOSFET Q5-4 is controlled to operate normally.

When the driving signal Vdrv_Q6 outputted by the SR driving controller 3 is high-level, a driving signal Vg_Q6(1/2) outputted from the third AND gate AND3 is high-level, and the MOSFET Q6-1 and the MOSFET Q6-2 are controlled to be turned on. When the driving signal Vdrv_Q6 outputted by the SR driving controller 3 is low-level, the driving signal Vg_Q6(1/2) outputted by the third AND gate AND3 is low-level, and the MOSFET Q6-1 and the MOSFET Q6-2 are controlled to be turned off, that is, the driving signal inputted to the MOSFET Q6-1 and the MOSFET Q6-2 is controlled to operate normally.

When the driving signal Vdrv_Q6 outputted by the SR driving controller 4 is high-level, a driving signal Vg_Q6(3/4) outputted by the fourth AND gate AND4 is high-level, and the MOSFET Q6-3 and the MOSFET Q6-4 are controlled to be turned on. When the driving signal Vdrv_Q6 outputted by the SR driving controller 4 is low-level, the driving signal Vg_Q6(3/4) outputted by the fourth AND gate AND4 is low-level, and the MOSFET Q6-3 and the MOSFET Q6-4 are controlled to be turned off, that is, the driving signal inputted to the MOSFET Q6-3 and the MOSFET Q6-4 are controlled to operate normally.

In FIG. 6, the driving signals inputted to the MOSFET Q5-1, the MOSFET Q5-2, the MOSFET Q5-3, the MOSFET Q5-4, the MOSFET Q6-1, the MOSFET Q6-2, the MOSFET Q6-3, and the MOSFET Q6-4 are controlled to all operate normally, that is, all of the MOSFETs in the circuit are controlled to all operate normally.

The SR driving controller in the embodiment of the present disclosure may be a self-driven DS voltage controller chip or a circuit constructed by using a comparator circuit.

FIG. 7 is a schematic diagram of a completer process of a synchronous rectification driving method according to an embodiment of the present disclosure.

In step S701, an output current of the direct-current converter is detected.

In step S702, whether the output current is greater than a first-level of preset threshold Ith1 and less than or equal to a second-level of preset threshold Ith2 is determined. If the output current is greater than a first-level of preset threshold Ith1 and less than or equal to a second-level of preset threshold Ith2, step S703 is performed; otherwise, step S704 is performed.

In step S703, the driving signals inputted to some of the synchronous rectification transistors in each of the switching units in the synchronous rectification circuit of the direct-current converter are controlled to be continuously turned off.

In step S704, whether the output current is less than or equal to the first-level of preset threshold Ith1 is determined. If the output current is less than or equal to the first-level of preset threshold Ith1, step S705 is performed, otherwise, step S706 is performed.

In step S705, driving signals inputted to all synchronous rectification transistors in the synchronous rectification circuit of the direct-current converter are controlled to be continuously turned off.

In step S706, the driving signals inputted to all synchronous rectification transistors in the synchronous rectification circuit of the direct-current converter are controlled to operate normally.

It should be noted that in the embodiment of the present disclosure, controlling the driving signals inputted to the synchronous rectification transistors to be continuously turned off means controlling the synchronous rectification transistors to be continuously turned off, and controlling driving signals inputted to the synchronous rectification transistors to operate normally means controlling the synchronous rectification transistors to operate normally, that is, to be turned on for one half of a cycle and turned off for the other half of the cycle.

In the embodiment of the disclosure, the number of the synchronous rectification transistors in the switching units in the synchronous rectification circuit is unrestricted. The number of synchronous rectification transistors which are controlled to be continuously turned off when the detected output current is less than or equal to a preset threshold in each of the switching units is unrestricted. When multiple levels of preset thresholds are employed to control the synchronous rectification transistors to be continuously turned off, the number of the continuously turned-off synchronous rectification transistors corresponding to each level of preset threshold may be determined based on actual conditions. For example, when the output current is smaller than or equal to 20A and is greater than 15A, one synchronous rectification transistor in each of the switching units is controlled to be continuously turned-off. When the output current is smaller than or equal to 15A and is greater than 10A, two synchronous rectification transistors in each of the switching units are controlled to be continuously turned-off. When the output current is smaller than 10A, three synchronous rectification transistors in each of the switching units are continuously turned-off, and so on in a similar way.

The transformer in the embodiment of the present disclosure may be a transformer with a center tap or a transformer without a center tap. The DC-DC conversion circuit in the embodiment of the present disclosure may be a full-bridge conversion circuit or a half-bridge conversion circuit. The synchronous rectification circuit in the embodiment of the present disclosure may be a half-bridge synchronous rectification circuit or a full-bridge synchronous rectification circuit, or may be another form of a synchronous rectification circuit, which is not limited in the present disclosure.

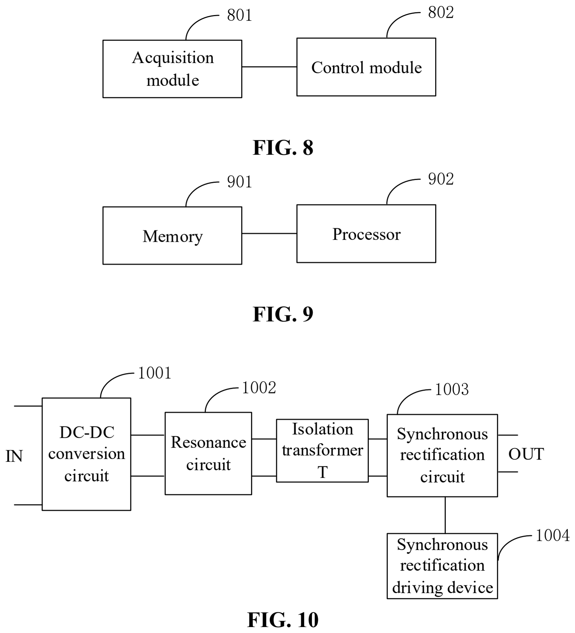

Based on the same inventive concept, a synchronous rectification driving apparatus is further provided according to an embodiment of the present disclosure. This apparatus is applied to a synchronous rectification circuit in a direct-current converter, where the synchronous rectification circuit includes at least two switching units, each of the switching units includes M synchronous rectification transistors connected in parallel, and M is a positive integer greater than or equal to 2, as shown in FIG. 8, the apparatus includes an acquisition module 801 and a control module 802.

The acquisition module 801 is configured to obtain detection data representing a total current flowing through synchronous rectification transistors in any of the switching units when the driving signals inputted to the synchronous rectification transistors in the synchronous rectification circuit are controlled to operate normally.

The control module 802 is configured to compare the detection data with a preset threshold, and when the detection data is less than or equal to the preset threshold, for each of the switching units, control the driving signals inputted to N synchronous rectification transistors in the switching unit to be continuously turned off, where N is a positive integer less than or equal to M.

In an optional embodiment, the preset threshold includes multiple levels of preset thresholds, where a present-level of preset threshold is less than a next-level of preset threshold.

The control module 802 is further configured to:
when the detection data is less than or equal to the present-level of preset threshold and greater than a previous-level of preset threshold for the present-level of preset threshold, for each of the switching units, control the driving signals inputted to synchronous rectification transistors corresponding to the present-level of preset threshold in the switching unit to be continuously turned off;
where the number of synchronous rectification transistors corresponding to each level of preset threshold is negatively correlated to the level number of each level of the preset threshold.

In an optional embodiment, the control module 802 is further configured to:
when the detection data is less than or equal to a first-level of preset threshold, for each of the switching units, control the driving signals inputted to synchronous rectification transistors corresponding to the first-level of preset threshold in the switching unit to be continuously turned off;
where the first-level of preset threshold is less than any of other levels of preset thresholds except for the first-level of preset threshold.

In an optional embodiment, when the detection data is less than or equal to the first-level of preset threshold, for each of the switching units, the control module 802 is further configured to:
when the detection data is less than or equal to the first-level of preset threshold, for each of the switching units, control the driving signals inputted to all synchronous rectification transistors in the switching unit to be continuously turned off.

In an optional embodiment, the detection data includes one of:
an output current of the direct-current converter;
an output power of the direct-current converter; and
a total current flowing through synchronous rectification transistors in any of the switching units.

Based on the same inventive concept, a synchronous rectification driving device is further provided according to an embodiment of the present disclosure. The synchronous rectification driving device is applied to a synchronous rectification circuit in a direct-current converter. The synchronous rectification circuit includes at least two switching units, each of the switching units includes M synchronous rectification transistors connected in parallel, and M is a positive integer greater than or equal to 2. As shown in FIG. 9, the synchronous rectification driving device includes a memory 901, a processor 902, and a computer program stored on the memory and executable on the processor. The processor 902, when executing the computer program, implements the steps of the synchronous rectification driving method as described below:
obtaining detection data representing a total current flowing through synchronous rectification transistors in any of the switching units when driving signals inputted to the synchronous rectification transistors in the synchronous rectification circuit are controlled to all operate normally.
comparing the detection data with a preset threshold, and when the detection data is less than or equal to the preset threshold, for each of the switching units, controlling the driving signals inputted to N synchronous rectification transistors in the switching unit to be continuously turned off, where N is a positive integer less than or equal to M.

In a possible implementation, the preset threshold includes multiple levels of preset thresholds, where a present-level of preset threshold is less than a next-level of preset threshold;
The processor 902 is further configured to:
when the detection data is less than or equal to the present-level of preset threshold and greater than a previous-level of preset threshold for the present-level of preset threshold, for each of the switching units, control the driving signals inputted to synchronous rectification transistors corresponding to the present-level of preset threshold in the switching unit to be continuously turned off;
where the number of synchronous rectification transistors corresponding to each level of preset threshold is negatively correlated to the level number of each level of the preset threshold.

In a possible implementation, the processor 902 is further configured to:
when the detection data is less than or equal to a first-level of preset threshold, for each of the switching units, control the driving signals inputted to synchronous rectification transistors corresponding to the first-level of preset threshold in the switching unit to be continuously turned off;
where the first-level of preset threshold is less than any of other levels of preset thresholds except for the first-level of preset threshold.

In an possible implementation, when the detection data is less than or equal to the first-level of preset threshold, for each of the switching units, the processor 902 is further configured to:
when the detection data is less than or equal to the first-level of preset threshold, for each of the switching units, control the driving signals inputted to all synchronous rectification transistors in the switching unit to be continuously turned off.

In an optional embodiment, the detection data includes one of:
an output current of the direct-current converter;
an output power of the direct-current converter; and
a total current flowing through synchronous rectification transistors in any of the switching units.

Based on the same inventive concept, a direct-current converter is further provided according to an embodiment of the present disclosure. As shown in FIG. 10, the direct-current converter includes: a DC-DC conversion circuit 1001, a resonance circuit 1002, an isolation transformer T, a synchronous rectification circuit 1003, and a synchronous rectification driving device 1004 as described in any of the above embodiments.

The DC-DC conversion circuit 1001 is electrically connected to a primary side of the isolation transformer T through the resonance circuit 1002, a secondary side of the isolation transformer T is electrically connected to the synchronous rectification circuit 1003, and the rectification driving device 1004 is electrically connected to a control terminal of the synchronous rectification circuit 1003.

Those skilled in the art may make various modifications and variations to the present disclosure without departing from the spirit and scope of the present disclosure. Hence, when the modifications and variations of the present disclosure fall within the scope of the claims of the present disclosure and equivalents thereof, the present disclosure is also intended to include such modifications and variations.

## Claims

1. A synchronous rectification driving method for a synchronous rectification circuit in a direct-current converter, wherein the synchronous rectification circuit comprises at least two switching units, and each of the switching units comprises M synchronous rectification transistors connected in parallel, where M is a positive integer greater than or equal to 2, the method comprises:
obtaining detection data representing a total current flowing through the synchronous rectification transistors in any of the switching units when all driving signals inputted to the synchronous rectification transistors in the synchronous rectification circuit operate normally; and
comparing the detection data with a preset threshold, and controlling, for each of the switching units, the driving signals inputted to N synchronous rectification transistors in the switching unit to be continuously turned off when the detection data is less than or equal to the preset threshold, where N is a positive integer less than or equal to M.

2. The synchronous rectification driving method according to claim 1, wherein the preset threshold comprises a plurality of levels of preset thresholds, wherein a present-level of preset threshold is less than a next-level of preset threshold; and
the controlling, for each of the switching units, the driving signals inputted to N synchronous rectification transistors in the switching unit to be continuously turned off when the detection data is less than or equal to the preset threshold comprises:
controlling, for each of the switching units, the driving signals inputted to synchronous rectification transistors corresponding to a present-level of preset threshold in the switching unit to be continuously turned off when the detection data is less than or equal to the present-level of preset threshold and greater than a previous-level of preset threshold for the present-level of preset threshold;
wherein a number of synchronous rectification transistors corresponding to each level of preset threshold is negatively correlated to a level number of each level of preset threshold.

3. The synchronous rectification driving method according to claim 2, wherein the method further comprises:
controlling, for each of the switching units, the driving signals inputted to synchronous rectification transistors corresponding to a first-level of preset threshold in the switching unit to be continuously turned off when the detection data is less than or equal to the first-level of preset threshold;
wherein the first-level of preset threshold is less than any of other levels of preset thresholds except for the first-level of preset threshold.

4. The synchronous rectification driving method according to claim 3, wherein the controlling, for each of the switching units, the driving signals inputted to synchronous rectification transistors corresponding to the first-level of preset threshold in the switching unit to be continuously turned off when the detection data is less than or equal to the first-level of preset threshold comprises:
controlling, for each of the switching units, the driving signals inputted to all synchronous rectification transistors in the switching unit to be continuously turned off when the detection data is less than or equal to the first-level of preset threshold.

5. The synchronous rectification driving method according to any one of claims 1 to 4, wherein the detection data comprises one of:
an output current of the direct-current converter;
an output power of the direct-current converter; and
the total current flowing through the synchronous rectification transistors in any of the switching units.

6. A synchronous rectification driving apparatus for a synchronous rectification circuit in a direct-current converter, wherein the synchronous rectification circuit comprises at least two switching units, each of the switching units comprises M synchronous rectification transistors connected in parallel, where M is a positive integer greater than or equal to 2, the apparatus comprises:
an acquisition module, configured to obtain detection data representing a total current flowing through the synchronous rectification transistors in any of the switching units when all driving signals inputted to the synchronous rectification transistors in the synchronous rectification circuit operate normally; and
a control module, configured to compare the detection data with a preset threshold, and control, for each of the switching units, the driving signals inputted to N synchronous rectification transistors in the switching unit to be continuously turned off when the detection data is less than or equal to the preset threshold, where N is a positive integer less than or equal to M.

7. The synchronous rectification driving apparatus according to claim 6, wherein the preset threshold comprises a plurality of levels of preset thresholds, wherein a present-level of preset threshold is less than a next-level of preset threshold;
the control module is configured to:
control, for each of the switching units, the driving signals inputted to synchronous rectification transistors corresponding to the present-level of preset threshold in the switching unit to be continuously turned off when the detection data is less than or equal to the present-level of preset threshold and greater than a previous-level of preset threshold for the present-level of preset threshold;
wherein a number of synchronous rectification transistors corresponding to each level of preset threshold is negatively correlated to a level number of each level of preset threshold.

8. The synchronous rectification driving apparatus according to claim 7, wherein the control module is further configured to:
control, for each of the switching units, the driving signals inputted to synchronous rectification transistors corresponding to a first-level of preset threshold in the switching unit to be continuously turned off when the detection data is less than or equal to the first-level of preset threshold;
wherein the first-level of preset threshold is less than any of other levels of preset thresholds except for the first-level of preset threshold.

9. The synchronous rectification driving apparatus according to claim 8, wherein when the detection data is less than or equal to the first-level of preset threshold, for each of the switching units, the control module is further configured to:
control, for each of the switching units, the driving signals inputted to all synchronous rectification transistors in the switching unit to be continuously turned off when the detection data is less than or equal to the first-level of preset threshold.

10. The synchronous rectification driving apparatus according to any one of claims 6 to 8, wherein the detection data comprises one of:
an output current of the direct-current converter;
an output power of the direct-current converter; and
the total current flowing through the synchronous rectification transistors in any of the switching units.

11. A synchronous rectification driving device for a synchronous rectification circuit in a direct-current converter, wherein the synchronous rectification circuit comprises at least two switching units, and each of the switching units comprises M synchronous rectification transistors connected in parallel, where M is a positive integer greater than or equal to 2, the synchronous rectification driving device comprises a memory, a processor, and a computer program stored on the memory and executable on the processor, wherein the processor, when executing the computer program, is configured to perform the steps of the method according to any one of claims 1 to 5.

12. A direct-current converter, comprising: a DC-DC conversion circuit, a resonance circuit, an isolation transformer, a synchronous rectification circuit, and the synchronous rectification driving device according to claim 11;
wherein the DC-DC conversion circuit is electrically connected to a primary side of the isolation transformer through the resonance circuit, a secondary side of the isolation transformer is electrically connected to the synchronous rectification circuit, and the rectification driving device is electrically connected to a control terminal of the synchronous rectification circuit.
